**Europäisches Patentamt**

**European Patent Office**

**Office européen des brevets**

(19)

(11) Veröffentlichungsnummer : **0 489 971 B1**

(12)

# EUROPÄISCHE PATENTSCHRIFT

(45) Veröffentlichungstag der Patentschrift :
**15.11.95 Patentblatt 95/46**

(51) Int. Cl.⁶ : **H02M 7/48**

(21) Anmeldenummer : **90124288.3**

(22) Anmeldetag : **14.12.90**

(54) **Verfahren und Vorrichtung zur Steuerung einer m-pulsigen Wechselrichteranordung, bestehend aus einem Master-Wechselrichter und wenigstens einem Slave-Wechselrichter.**

(43) Veröffentlichungstag der Anmeldung :
**17.06.92 Patentblatt 92/25**

(45) Bekanntmachung des Hinweises auf die
Patenterteilung :
**15.11.95 Patentblatt 95/46**

(84) Benannte Vertragsstaaten :
**CH DE FR GB IT LI SE**

(56) Entgegenhaltungen :
**DE-A- 3 602 496**
**GB-A- 1 138 357**

(73) Patentinhaber : **SIEMENS
AKTIENGESELLSCHAFT
Wittelsbacherplatz 2
D-80333 München (DE)**

(72) Erfinder : **Jez, Joze
Am Europakanal 4
8520 Erlangen (DE)**

EP 0 489 971 B1

**Beschreibung**

Verfahren und Vorrichtung zur Steuerung einer m-pulsigen Wechselrichteranordnung, bestehend aus einem Master-Wechselrichter und wenigstens einem Slave-Wechselrichter

Die Erfindung bezieht sich auf ein Verfahren und eine Vorrichtung zur Steuerung einer m-pulsigen Wechselrichteranordnung mit einem Wechselrichtersteuersatz zur Erzeugung von m Steuersignalen, wobei die Wechselrichteranordnung aus einer Parallelschaltung eines Master-Wechselrichters und wenigstens eines Slave-Wechselrichters besteht, wobei die Ausgänge dieser Teilwechselrichter jeweils mit einer Drossel versehen sind.

Bei der Parallelschaltung von mehreren Stromrichtergeräten, beispielsweise Wechselrichter und Chopper, die mit Pulsbreitenmodulation die Spannung oder den Strom einstellen, entstehen an den Ausgängen der einzelnen Teilgeräte unterschiedliche Spannungszeitflächen. Die Ausgangsspannungen der einzelnen parallel geschalteten Wechselrichter sind somit nicht gleich und weichen von ihrem gemeinsamen Sollwert ab. Dies hat eine ungleichmäßige Aufteilung des Verbraucherstromes auf die Teilwechselrichter zur Folge.

Die Ursachen dafür sind:
- Toleranzen in der Speicherzeit und deren Temperaturabhängigkeit,
- unterschiedliche Verzögerungszeiten zwischen dem vom Steuersatz vorgegebenem Sollschaltzeitpunkt und dem tatsächlichen Schaltzeitpunkt,
- Toleranzen der Durchlaßspannungen und der Leitungswiderstände.

Schon mittelgroße Unterschiede in den Speicherzeiten der Ventile, beispielsweise Transistoren oder abschaltbare Thyristoren (GTO-Thyristoren), führen zu großen Unsymmetrien in den Ausgangsströmen. Diese Unterschiede in den Speicherzeiten haben Drehmoment- und Drehzahlpendelungen, insbesondere bei niedrigen Drehzahlen zur Folge und beeinflussen das gesamte Regelungsverhalten des Antriebs ungünstig. Bei großen Speicherzeitdifferenzen kann zusätzlich noch eine thermische Überlastung einzelner Wechselrichterphasen eintreten.

Auch unterschiedliche Kabellängen zwischen dem stromrichtergespeisten Motor und den einzelnen Teilwechselrichtern der Wechselrichteranordnung nehmen deutlich Einfluß auf die Stromaufteilung.

Aus der GB-A-1 138 357 ist eine Wechselrichteranordnung bekannt, die mindestens zwei parallel geschaltete Wechselrichter aufweist. Jedem Wechselrichter ist eine Regeleinrichtung zugeordnet. Jeder Regler ist eingangsseitig mit dem erzeugten Wechselstromnetz, einer Synchronisiereinrichtung und einer Einrichtung, die die Richtung des Stromes erkennt, verbunden. Die Phasen des einen Wechselrichters sind mittels einer Erregungsspule eines Hall-Generators mit der Einrichtung, die die Richtung des Stromes erkennt, verknüpft. In Abhängigkeit von der Polarität der Hall-Spannung wird in der Basisschaltung der Transistorschaltung der Regeleinrichtung eine zusätzliche Spannung hinzugefügt oder abgezogen. In Abhängigkeit von dem ermittelten Differenzstromwert wird die Steuerung dieser beiden Wechselrichter gleichzeitig derart verändert, daß die Phasenstrom-Istwertdifferenz zu Null wird.

Der Erfindung liegt nun die Aufgabe zugrunde, ein Verfahren und eine Vorrichtung zur Steuerung der eingangs genannten Wechselrichteranordnung anzugeben, wodurch entstehende Stromdifferenzen zwischen einem Master-Wechselrichter und einem Slave-Wechselrichter ausgeregelt werden können.

Diese Aufgabe wird erfindungsgemäß durch die Merkmale der Ansprüche 1, 5 und 6 gelöst.

Um entstehende Stromdifferenzen ausregeln zu können, müssen zunächst die Stromdifferenzen ermittelt werden, wobei die Phasenströme eines Master-Wechselrichters und die Phasenströme eines Slave-Wechselrichters verwendet werden. Diese ermittelten Phasenstrom-Istwertdifferenzen dienen zur Erzeugung von Steuersignalen für den Slave-Wechselrichter. Dabei werden in Abhängigkeit von der Polarität und der Amplitude dieser Phasenstrom-Istwertdifferenzen die Steuersignale des Wechselrichtersteuersatzes derart zeitlich verzögert, daß sich die Phasenstrom-Istwertdifferenzen verringern. Diese erzeugten Steuersignale steuern den Slave-Wechselrichter an, während die Steuersignale des Wechselrichtersteuersatzes den Master-Wechselrichter ansteuern.

Da die vom Wechselrichtersteuersatz bestimmten Schaltzeitpunkte nicht im voraus bekannt sind, ist ein Regeleingriff in der Form eines verfrühten Schaltens nicht möglich. Daher besteht nur die Möglichkeit einer Verzögerung der Schaltbefehle. Diese Zeitverzögerung, die in Abhängigkeit von der Polarität und der Amplitude von ermittelten Phasenstrom-Istwertdifferenzen bestimmt wird, wird beim Ausschalten und beim Einschalten bewerkstelligt.

Durch eine derartig geeignete Veränderung des Zeitpunktes für die Ein- und Ausschaltbefehle der Ventile des Slave-Wechselrichters können die Fehl-Spannungs-Zeitflächen, die sich aufgrund der eingangs genannten nachteiligen Einflüsse ergeben, direkt an den Wechselrichterausgängen, weitgehend kompensiert werden. Damit wird eine viel bessere Stromaufteilung erreicht. Infolge der besseren Stromaufteilung reduzieren sich die Harmonischen niedriger Ordnung, wodurch eine Reduzierung der Drehmoment- und Drehzahlpendelungen erreicht wird.

Bei der erfindungsgemäßen Vorrichtung zur Durchführung des Steuerverfahrens für die eingangs genannte Wechselrichteranordnung ist dem Wechselrichtersteuersatz eine Parallelschalt-Baugruppe nachgeschaltet. Dieser Parallelschalt-Baugruppe sind außerdem die ermittelten Phasenstrom-Istwertdifferenzen zugeführt. Ausgangsseitig ist die Parallelschalt-Baugruppe mit den Steuereingängen des Slave-Wechselrichters elektrisch leitend verknüpft. Die Steuereingänge des Master-Wechselrichters sind mit den Ausgängen des Wechselrichtersteuersatzes verbunden.

Bei einem vorteilhaften Verfahren werden zusäztlich aus den Steuerimpulsen des Wechselrichtersteuersatzes mittels Phasenfehlspannungs-Signalen linearisierte Steuersignale für den Master-Wechselrichter derart erzeugt, daß in Abhängigkeit von der Polarität und der Amplitude dieser Phasenfehlspannungs-Signale die Steuersignale des Wechselrichtersteuersatzes zeitlich verzögert werden. Damit wird eine Spannungsform, die der Steuersatz verlangt, auch erreicht.

Durch diese sogenannte Linearisierung in Kombination mit der Delta-I-Regelung wird die Unsymmetrie des resultierenden Drehstromnetzes reduziert, wobei die Delta-I-Regelung die Unsymmetrie zwischen dem Master-Wechselrichter und einem Slave-Wechselrichter und die zusätzliche Linearisierung den Gleichanteil reduziert. Zusätzlich erhalten die Teilwechselrichter dadurch eine thermische Reserve, die die Rücknahme der Leistungsreduktion zuläßt. Unterschiedliche Kabellängen zwischen Motor und den Teilwechselrichtern nehmen nur noch sehr geringen Einfluß auf die Stromaufteilung. Außerdem wird eine gute Rundlaufgüte des Antriebs bei kleinen Drehzahlen erreicht.

Bei einem sehr kostengünstigen Verfahren werden die gemessenen Phasenstrom-Istwerte der Teilwechselrichter elektronisch subtrahiert. Dabei werden immer phasenmäßig die Phasenstrom-Istwerte des Slave-Wechselrichters von den Phasenstrom-Istwerten des Master-Wechselrichters subtrahiert. Da für eine übergeordnete Regel- und Steuereinrichtung die Stromerfassungen der Teilwechselrichter im allgemeinen bereits vorhanden sind, ist dieses Verfahren besonders kostengünstig.

Vorteilhafte Ausgestaltungen der Vorrichtung sind den Ansprüchen 6 bis 10 zu entnehmen.

Zur weiteren Erläuterung der Erfindung wird auf die Zeichnung Bezug genommen, in der Ausführungsbeispiele einer Vorrichtung zur Durchführung des erfindungsgemäßen Verfahrens schematisch veranschaulicht sind.

| | |
|---|---|
| Figur 1 | zeigt eine Ausführungsform einer Vorrichtung zur Steuerung einer Wechselrichteranordnung, |
| Figur 2 | zeigt eine weitere Ausführungsform einer Vorrichtung zur Steuerung einer Wechselrichteranordnung, |
| Figur 3 | zeigt ein Blockschaltbild einer Parallelschalt-Baugruppe nach Figur 1, in |
| Figur 4 | ist ein Blockschaltbild eines Differenzbildners nach Figur 2 dargestellt, |
| Figur 5 | veranschaulicht eine Zelle des Differenzbildners nach Figur 4, in |
| Figur 6 | ist ein Blockschaltbild einer Parallelschalt-Baugruppe nach Figur 2 veranschaulicht, in |
| Figur 7 | ist ein Blockschaltbild einer von mehreren Verzögerungs-Baugruppen der Parallelschalt-Baugruppe dargestellt und in |
| Figur 8 | ist eine Schaltungsanordnung eines Ausschalt-Verzögerungs-Bausteins der Verzögerungs-Baugruppe der Parallelschalt-Baugruppe näher dargestellt, die |
| Figur 9 | zeigt eine Schaltungsanordnung der Verzögerungs-Baugruppe nach Figur 7, in den |
| Figuren 10 bis 12 | ist die Kommutierung eines Phasenstromes des Master-Wechselrichters und eines Slave-Wechselrichters dargestellt und in den |
| Figuren 13 bis 32 | sind jeweils die Signalverläufe der Schaltungsanordnung nach Figur 9 in einem Diagramm über der Zeit t dargestellt. |

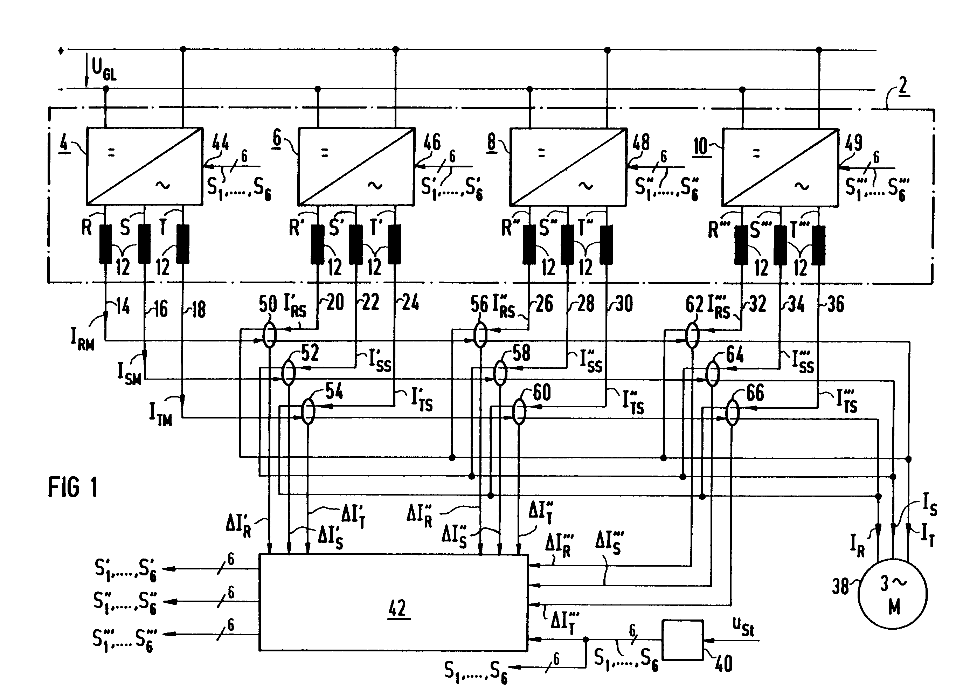

Die Figur 1 zeigt eine Wechselrichteranordnung 2, die eingangsseitig mit einer Gleichspannung $U_{GL}$ gespeist wird. Diese Wechselrichteranordnung 2 besteht aus einer Parallelschaltung eines Master-Wechselrichters 4 und drei Slave-Wechselrichter 6, 8 und 10. Die Ausgänge jedes Teilwechselrichters 4 bis 10 sind mit einer Drossel 12 versehen. Die Phasenleiter 14, 16 und 18 des Master-Wechselrichters 4, die Phasenleiter 20, 22 und 24 des Slave-Wechselrichters 6, die Phasenleiter 26, 28 und 30 des Slave-Wechselrichters 8 und die Phasenleiter 32, 34 und 36 des Slave-Wechselrichters 10 sind phasenmäßig elektrisch parallel geschaltet. An den phasenmäßig parallel geschalteten Leitern 14 bis 36 ist eine Induktionsmaschine 38 angeschlossen. Als Induktionsmaschine 38 ist eine dreiphasige Asynchronmaschine vorgesehen und die Teilwechselrichter 4, 6, 8 und 10 sind als sechspulsige Brückenschaltungen ausgeführt.

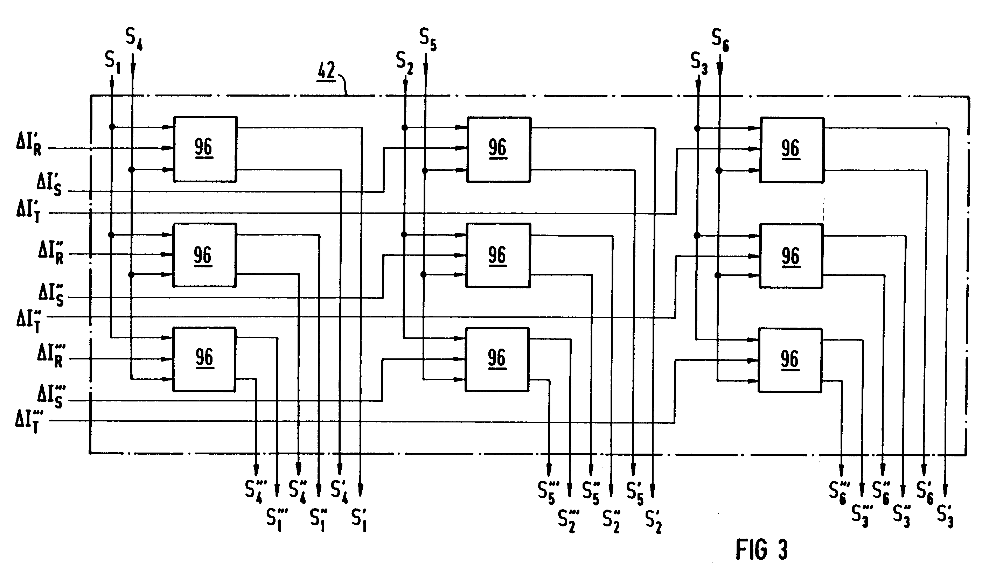

Diese Wechselrichteranordnung 2 hat einen Wechselrichtersteuersatz 40, der eingangsseitig mit einer Steuerspannung $u_{St}$ beaufschlagt wird. Diese Steuerspannung $u_{St}$ wird in einer nicht näher dargestellten Regelungseinrichtung in Abhängigkeit von Prozeßdaten erzeugt. Der Wechselrichtersteuersatz 40 erzeugt mit bekannten Steuerverfahren sechs Steuersignale $S_1,...,S_6$, die einerseits mit einer nachgeschalteten Parallelschalt-Baugruppe 42 und andererseits direkt mit den Steuereingängen 44 des Master-Wechselrichters 4 verknüpft sind. Ein Blockschaltbild der Parallelschalt-Baugruppe 42 ist in Figur 3 näher dargestellt. An jeweils sechs Ausgängen dieser Parallelschalt-Baugruppe 42 stehen Steuersignale $S_1',...,S_6'$ bzw. $S_1'',...,S_6''$ bzw. $S_1''',...,S_6'''$ an. Die Ausgänge mit den Steuersignalen $S_1',...,S_6'$ sind mit den Steuereingängen 46 des Slave-Wechselrichters 6, die Ausgänge mit den Steuersignalen $S_1'',...,S_6''$ sind mit den Steuereingängen 48 des Slave-Wechselrichters 8 und die Ausgänge mit den Steuersignalen $S_1''',...,S_6'''$ mit den Steuereingängen 49 des Slave-Wechselrichters 10 verbunden.

Die Parallelschalt-Baugruppe 42 ist eingangsseitig auch noch mit Stromwandlern 50 bis 66 elektrisch leitend verbunden. Durch jeden Wandler 50, 56 und 62 bzw. 52, 58 und 64 bzw. 54, 60 und 66 sind jeweils ein Phasenleiter 14 bzw. 16 bzw. 18 des Master-Wechselrichters 4 und ein Phasenleiter 20, 26 und 32 bzw. 22, 28 und 34 bzw. 24, 30 und 36 des Slave-Wechselrichters 6 bzw. 8 bzw. 10 geführt. Dabei ist darauf zu achten, daß die Phasenleiter des Master-Wechselrichters 4 und eines Slave-Wechselrichters 6 bzw. 8 bzw. 10 jeweils derart durch die Stromwandler 50 bis 66 geführt sind, daß die Phasenströme $I_{RM}$, $I_{RS}'$; $I_{SM}$, $I_{SS}'$; $I_{TM}$, $I_{TS}'$ bzw. $I_{RM}$, $I_{RS}''$; $I_{SM}$, $I_{SS}''$; $I_{TM}$, $I_{TS}''$ bzw. $I_{RM}$, $I_{RS}'''$; $I_{SM}$, $I_{SS}'''$; $I_{TM}$, $I_{TS}'''$ entgegengesetzt zueinander fließen. Dadurch stehen an den Ausgängen der Stromwandler 50 bis 66 jeweils Phasenstrom-Istwertdifferenzen $\Delta I_R',...,\Delta I_T'$ bzw. $\Delta I_R'',...,\Delta I_T''$ bzw. $\Delta I_R''',...,\Delta I_T'''$ an. Mittels dieser Phasenstrom-Istwertdifferenzen werden aus den Steuersignalen $S_1,...,S_6$ des Wechselrichtersteuersatzes 40 die Steuersignale $S_1',...,S_6'$, $S_1'',...,S_6''$, $S_1''',...,S_6'''$ erzeugt.

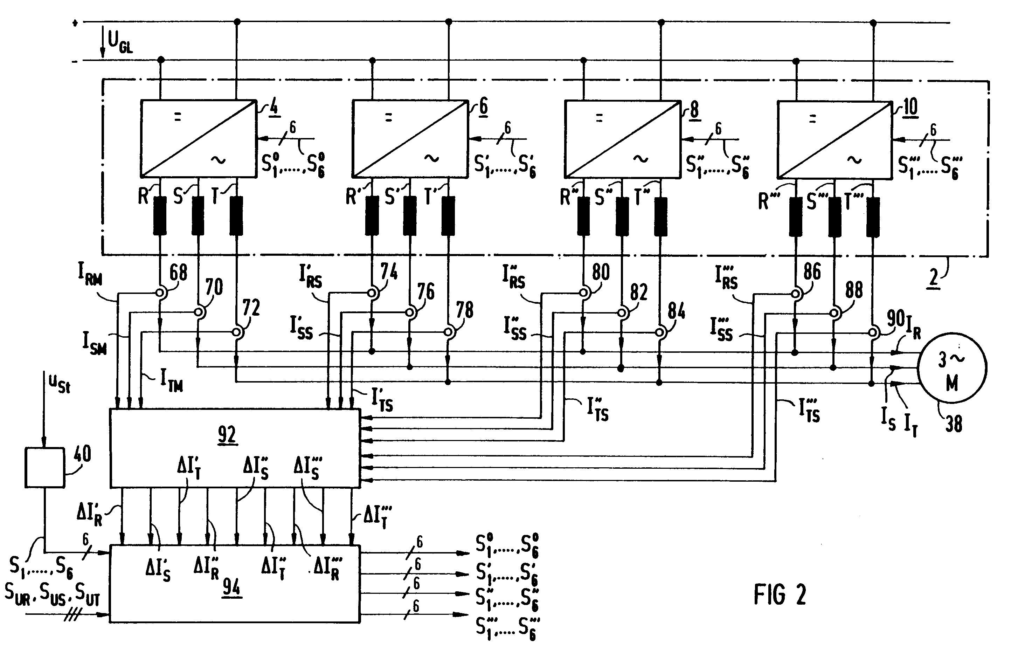

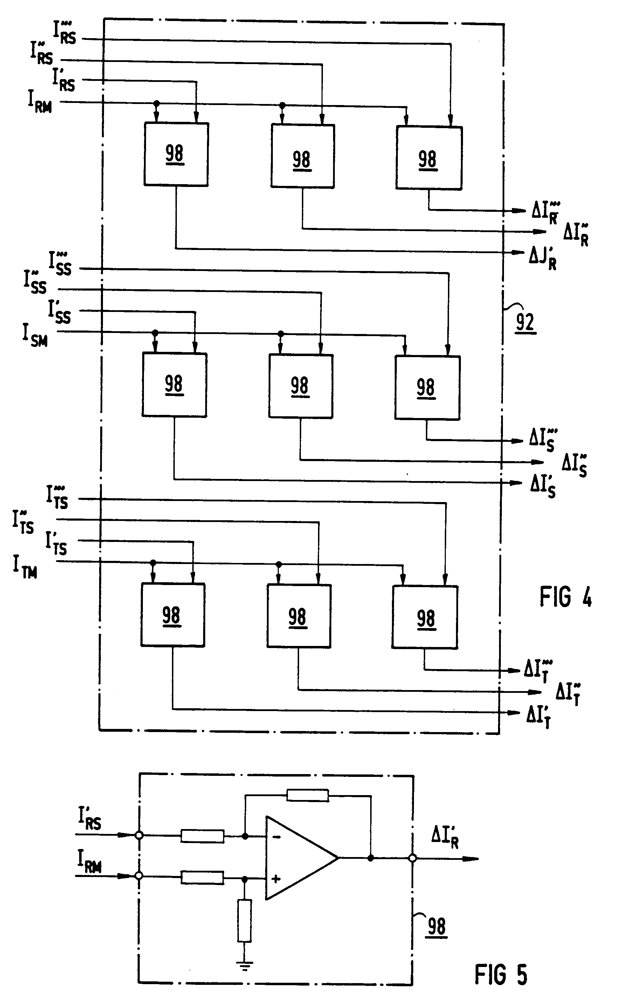

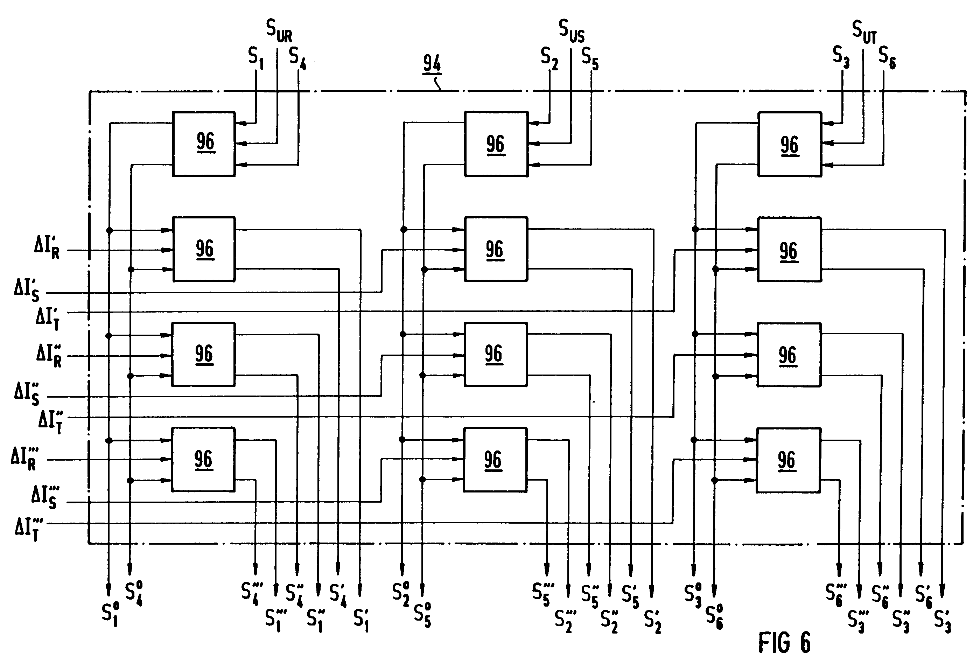

Die Vorrichtung gemäß Figur 2 unterscheidet sich von der Vorrichtung nach Figur 1 dadurch, daß anstelle von den Stromwandlern 50,...,66 Stromerfassungs-Einrichtungen 68 bis 90 verwendet werden. Die Ausgänge dieser Stromerfassungs-Einrichtungen 68 bis 90 sind mit einem Differenzbildner 92 verknüpft, der in den Figuren 4 und 5 näher dargestellt ist. Die Ausgänge dieses Differenzbildners 92 sind mit einer Parallelschalt-Baugruppe 94 verbunden, die in der Figur 6 näher dargestellt ist. Dieser Parallelschalt-Baugruppe 94 sind neben den Steuersignalen $S_1, ...,S_6$ des Wechselrichtersteuersatzes 40 auch noch Phasenfehlspannungs-Signale $S_{UR}$, $S_{US}$ und $S_{UT}$ zugeführt. In Abhängigkeit seiner Eingangssignale erzeugt diese Parallelschalt-Baugruppe 94 die Steuersignale $S_1',...,S_6'$ für den Master-Wechselrichter 4 und die Steuersignale $S_1',...,S_6'$ bzw. $S_1'',...,S_6''$ bzw. $S_1''',...,S_6'''$ für den Slave-Wechselrichter 6 bzw. 8 bzw. 10 der Wechselrichteranordnung 2. Diese Vorrichtung ist besonders kostengünstig, da die Teilwechselrichter 4 bis 10 im allgemeinen schon Stromerfassungs-Einrichtungen aufweisen. Wie die Figur 4 in Verbindung mit Figur 5 zeigt, bedarf der Aufbau des Differenzbildners 92 keinen großen Aufwand.

Die Parallelschalt-Baugruppe 42 kann auch mit dem Differenzbildner 92 und den Stromerfassungs-Einrichtungen 68 bis 90 kombiniert werden. Eine derartige Vorrichtung ist aus Übersichtlichkeitsgründen nicht näher dargestellt.

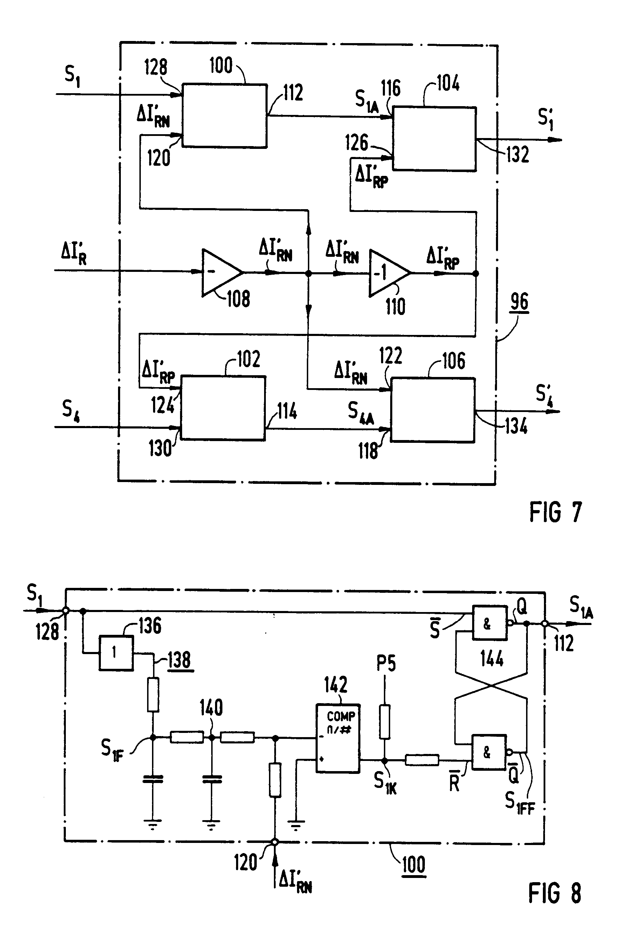

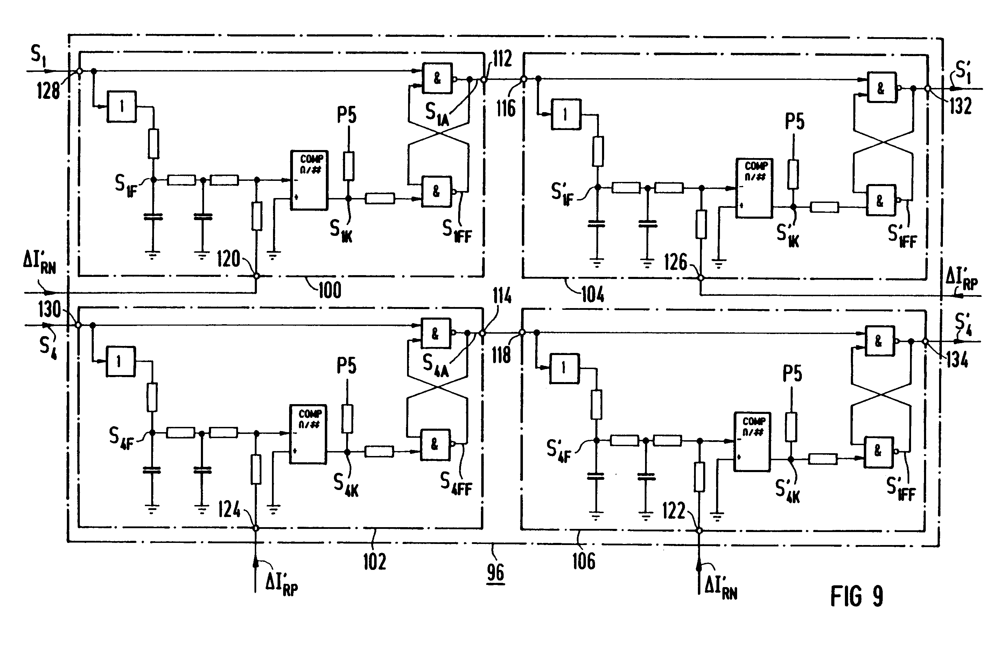

In Figur 3 ist ein Blockschaltbild der Parallelschalt-Baugruppe 42 nach Figur 1 dargestellt. Dieses Blockschaltbild zeigt den inneren Aufbau der Parallelschalt-Baugruppe 42. Diese Parallelschalt-Baugruppe 42 enthält bei einer dreiphasigen Wechselrichteranordnung 2 mit vier Teilwechselrichtern 4 bis 10 neun Verzögerungs-Baugruppen 96. In Figur 7 ist ein Blockschaltbild einer Verzögerungs-Baugruppe 96 veranschaulicht. Jeder Verzögerungs-Baugruppe 96 sind eingangsseitig eine ermittelte Phasenstrom-Istwertdifferenz $\Delta I_R',...,\Delta I_T'$ bzw. $\Delta I_R'',...,\Delta I_T''$ bzw. $\Delta I_R''', ...,\Delta I_T'''$ und zwei Steuersignale $S_1$, $S_4$ bzw. $S_2$, $S_5$ bzw. $S_3$, $S_6$ zugeführt. Dabei gehören die zwei Steuersignale und die Phasenstrom-Istwertdifferenz phasenmäßig zusammen. An den beiden Ausgängen einer jeden Verzögerungs-Baugruppe 96 stehen jeweils zwei Steuersignale $S_1'$, $S_4',...,S_1'''$, $S_4'''$, $S_2'$, $S_5',...,S_2'''$, $S_5'''$, $S'_3,S_6',...,S_3'''$, $S_6'''$ für die Slave-Wechselrichter 6 bis 10 an. Die erzeugten Steuersignale $S_1',...,S_6'$, $S_1'',...,S_6''$, $S_1''',...,S_6'''$ für die Slave-Wechselrichter 6 bis 10 sind über eine geeignete Veränderung der Zeitpunkte für die Ein- bzw. Ausschaltbefehle aus den Steuersignalen $S_1,...,S_6$ des Wechselrichtersteuersatzes 40 erzeugt worden. Die Veränderung des Zeitpunktes wird jeweils von einer ermittelten Phasenstrom-Istwertdifferenz bestimmt. Anhand der Figuren 9 und 13 bis 32 wird der Zusammenhang von Steuersignalen $S_1,...,S_6$ und Phasenstrom-Istwertdifferenzen $\Delta I_R',...,\Delta I_T'$ näher erläutert.

Die Figur 4 zeigt ein Blockschaltbild des Differenzbildners 92 nach Figur 2. Dieser Differenzbildner 92 enthält bei einer dreiphasigen Wechselrichteranordnung 2, bestehend aus vier Teilwechselrichtern 4 bis 10, neun Zellen 98, wobei eine Schaltungsanordnung einer Zelle 98 in Figur 5 näher dargestellt ist. Jede Zelle 98 enthält eingangsseitig einen Phasenstrom-Istwert $I_{RM}$ bzw. $I_{RS}$ bzw. $I_{RT}$ des Master-Wechselrichters 4 und ein Phasenstrom-Istwert $I_{RS}'$ bzw. $I_{SS}'$ bzw. $I_{TS}'$ des Slave-Wechselrichters 6. Am Ausgang einer jeden Zelle 98 steht die elektronisch ermittelte Phasenstrom-Istwertdifferenz $\Delta I_R'$ bzw. $\Delta I_S'$ bzw. $\Delta I_T'$ an.

EP 0 489 971 B1

Eine mögliche Schaltungsanordnung der Zelle 98 zeigt die Figur 5 und ist im Buch "Halbleiter-Schaltungstechnik", U. Tietze, Ch. Schenk, 1983, Seiten 300 bis 304, insbesondere auf Seite 301, näher beschrieben. Es bieten sich selbstverständlich auch digitale Subtrahierer an.

Die Figur 6 zeigt ein Blockschaltbild der Parallelschalt-Baugruppe 94 der Figur 2. Dieses Blockschaltbild unterscheidet sich vom Blockschaltbild nach Figur 3 der Parallelschalt-Baugruppe 42 nach Figur 1 dadurch, daß drei Verzögerungs-Baugruppen 96 hinzugefügt sind, an deren Eingängen jeweils ein Phasenfehlspannungs-Signal $S_{UR}$ bzw. $S_{US}$ bzw. $S_{UT}$ und zwei Steuersignale $S_1$, $S_4$ bzw. $S_2$, $S_5$ bzw. $S_3$, $S_6$ der Steuersignale des Wechselrichtersteuersatzes 40 anstehen. Ausgangsseitig erhält man linearisierte Steuersignale $S_1^\circ$, $S_4^\circ$ bzw. $S_2^\circ$, $S_5^\circ$ bzw. $S_3^\circ$, $S_6^\circ$ für den Master-Wechselrichter 4. Die Phasenfehlspannungs-Signale $S_{UR}$, $S_{US}$ und $S_{UT}$ werden mittels einer nicht näher dargestellten Schaltungsanordnung ermittelt. Diese Phasenfehlspannungs-Signale $S_{UR}$, $S_{US}$ und $S_{UT}$ bewirken, wie die Phasenstrom-Istwertdifferenzen $\Delta I_R'$,...,$\Delta I_T'$ bzw. $\Delta I_R''$,...,$\Delta I_T''$ bzw. $\Delta I_R'''$,...,$\Delta I_T'''$ eine zeitliche Veränderung der Zeitpunkte für die Ein- bzw. Ausschaltbefehle für die Ventile des Master-Wechselrichters 4. Durch diese zusätzliche Linearisierung der Steuersignale für den Master-Wechselrichter 4 wird erreicht, daß die tatsächliche Ausgangsspannung des Master-Wechselrichters, wegen der eingangs erwähnten Ursachen, für die Fehlspannungszeitflächen der Spannung, die der Steuersatz erfordert, auch angenähert wird.

Die Figur 7 zeigt ein Blockschaltbild einer Verzögerungs-Baugruppe 96. Diese Verzögerungs-Baugruppe 96 enthält eingangsseitig einen ersten und einen zweiten Ausschalt-Verzögerungs-Baustein 100 und 102 und ausgangsseitig einen ersten und einen zweiten Einschalt-Verzögerungs-Baustein 104 und 106. Außerdem enthält die Verzögerungs-Baugruppe 96 einen invertierenden Anpaßverstärker 108 und einen invertierenden Verstärker 110. Die Verzögerungs-Bausteine 100 bis 106 weisen jeweils zwei Eingänge und einen Ausgang auf und sind, wie aus der Figur 9 zu erkennen ist, identisch aufgebaut. Eine mögliche Schaltungsanordnung eines Verzögerungs-Bausteins 100 ist in Figur 8 näher dargestellt.

Der erste Ausschalt-Verzögerungs-Baustein 100 und der erste Einschalt-Verzögerungs-Baustein 104 sind elektrisch in Reihe geschaltet, genauso wie der zweite Ausschalt-Verzögerungs-Baustein 102 und der zweite Einschalt-Verzögerungs-Baustein 106. Dabei ist der Ausgang 112 bzw. 114 des ersten bzw. zweiten Ausschalt-Verzögerungs-Bausteins 100 bzw. 102 mit dem Steuersignal-Eingang 116 bzw. 118 des ersten bzw. zweiten Einschalt-Verzögerungs-Bausteins 104 bzw. 106 verknüpft. Der Stromeingang 120 bzw. 122 des ersten Ausschalt-Verzögerungs-Bausteins 100 bzw. des zweiten Einschalt-Verzögerungs-Bausteins 106 ist mit dem Ausgang des Anpaßverstärkers 108 verbunden, an dem die Phasenstrom-Istwertdifferenz $\Delta I_{RN}'$ ansteht. Der Stromeingang 124 bzw. 126 des zweiten Ausschalt-Verzögerungs-Bausteins 102 bzw. des ersten Einschalt-Verzögerungs-Bausteins 104 ist mit dem Ausgang des invertierenden Verstärkers 110 verknüpft, aus dem die Phasenstrom-Istwertdifferenz $\Delta I_{RP}'$ ansteht. Diese Istwert-Differenz $I_{RP}'$ ist gleich der invertierenden Istwert-Differenz $\Delta \overline{I_{RN}'}$.

Am Steuersignal-Eingang 128 des ersten Ausschalt-Verzögerungs-Bausteins 100 steht das Signal $S_1$ des Wechselrichtersteuersatzes 40 an, wobei das Steuersigal $S_4$ des Wechselrichtersteuersatzes 40 den Steuersignal-Eingang 130 des zweiten Ausschalt-Verzögerungs-Bausteins 102 zugeführt ist. Am Ausgang 132 des ersten Einschalt-Verzögerungs-Bausteins 104 ist das Steuersignal $S_1'$ und am Ausgang 134 des zweiten Einschalt-Verzögungs-Bausteins 106 ist das Steuersignal $S_4'$ für den Slave-Wechselrichter 6 abnehmbar. Am Eingang des invertierenden Anpaßverstärkers 108 steht die Phasenstrom-Istwertdifferenz $\Delta I_R'$ an, deren Polarität und Amplitude die Zeitpunkte für die Ein- bzw. Ausschaltbefehle der Ventile des Slave-Wechselrichters 6 geeignet verändert.

Die Verzögerungs-Bausteine 100 bis 106 sind nach Figur 9 identisch und die Figur 8 zeigt eine Schaltungsanordnung des Verzögerungs-Bausteins 100. Der Signaleingang 128 ist mit einem Anpaßverstärker 136 mit nachgeschaltetem Tiefpaß 138 verbunden. Ausgangsseitig ist der Tiefpaß 138 über ein RCR-Glied 140 mit einem invertierenden Eingang eines Komparators 142 verknüpft, dessen nichtinvertierender Eingang mit Masse verbunden ist. Ausgangsseitig ist der Komparator 142 über ein RS-Flip-Flop 144, das mittels NAND-Gatter aufgebaut ist, mit dem Ausgang 112 des Verzögerungs-Bausteins 100 verbunden. Der Stromeingang 120 dieses Verzögerungs-Bausteins 100 ist über einen Widerstand ebenfalls mit dem invertierenden Eingang des Komparators 142 elektrisch leitend verbunden. Außerdem ist der Signaleingang 128 des Verzögerungs-Bausteins 100 mit einem Eingang des RS-Flip-Flop 144 verknüpft.

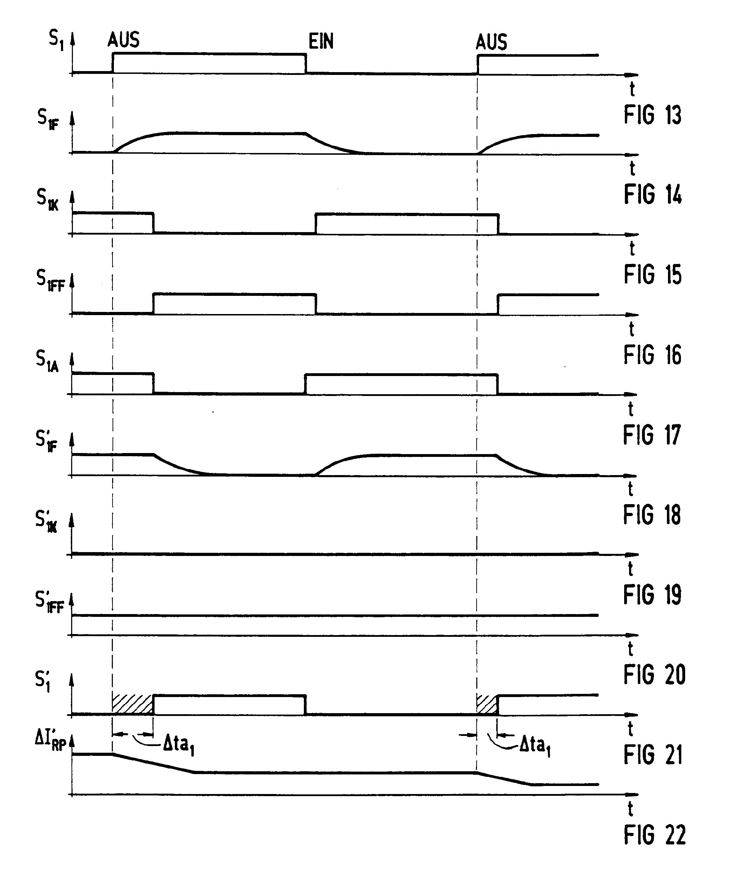

Das Steuersignal $S_1$, das Filterausgangssignal $S_{1F}$, das Komparatorsignal $S_{1K}$ und die komplementären Augangssignale $S_{1FF}$ und $S_{1A}$ sind jeweils in einem Diagramm über der Zeit t in den Figuren 13 bis 17 dargestellt. Die entsprechenden Signale für den nachgeschalteten ersten Einschalt-Verzögerungs-Baustein 104 sind mit einem ′ versehen und sind jeweils in einem Diagramm über der Zeit t in den Figuren 18 bis 21 dargestellt.

5

Die Signalverläufe des zweiten Ausschalt-Verzögerungs-Bausteins 102 und des zweiten Einschalt-Verzögerungs-Bausteins 106 sind jeweils in einem Diagramm über der Zeit t in den Figuren 22 bis 32 dargestellt. Wie die Figur 9 zeigt, werden die Phasenstrom-Istwertdifferenzen $\Delta I'_{RN}$ und $\Delta I'_{RP}$, von der Phasenstrom-Istwertdifferenzen $\Delta I'_R$ geeignet den Verzögerungsbausteinen 100,...,106 zugeführt. Bei der Darstellung der Signalverläufe gemäß den Figuren 13 bis 32 ist vorausgesetzt worden, daß die Phasenstrom-Istwertdifferenz $\Delta I'_R = I_{RM} - I'_{RS} > 0$ ist.

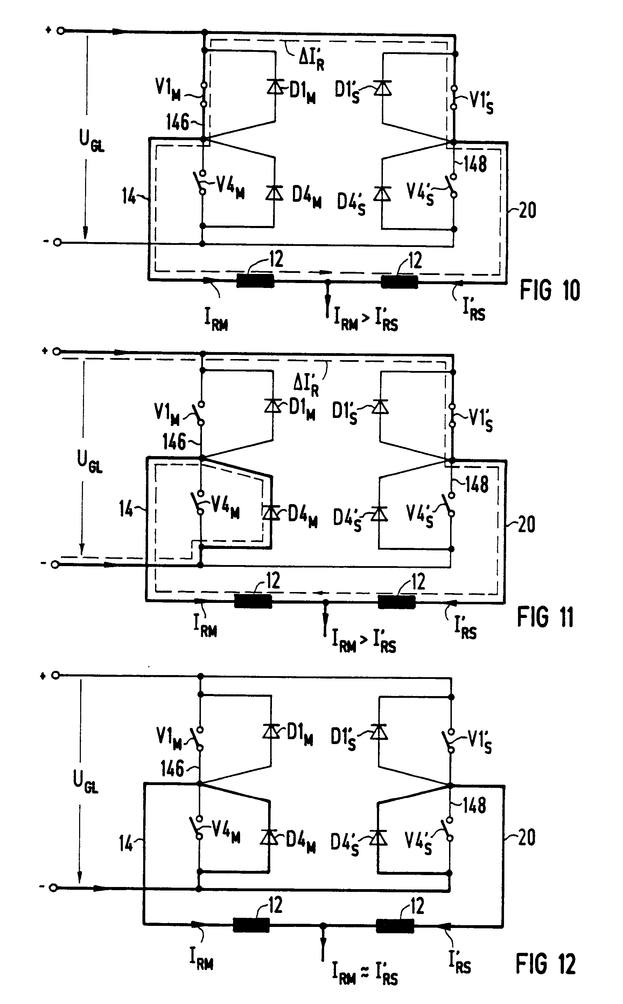

In den Figuren 10 bis 12 ist jeweils ein Brückenzweig 146 des Master-Wechselrichters 4 und ein Brückenzweig 148 des Slave-Wechselrichters 6 im einzelnen dargestellt. Beide Brückenzweige 146 und 148 sind elektrisch parallel geschaltet und werden aus einer Gleichspannungsquelle $U_{GL}$ gespeist. Der Brückenzweig 146 bzw. 148 enthält zwei elektrisch in Reihe geschaltete Ventile $V1_M$ und $V4_M$ bzw. $V1'_S$ und $V4'_S$, denen jeweils eine Freilaufdiode $D1_M$ und $D4_M$ bzw. $D1'_S$ und $D4'_S$ antiparallel geschaltet sind. Am Verbindungspunkt der beiden Ventile $V1_M$ und $V4_M$ bzw. $V1'_S$ und $V4'_S$ ist der Phasenleiter 14 bzw. 20 angeschlossen, die mit der Drossel 12 versehen sind.

In Figur 10 ist der Fall dargestellt, daß die Ventile $V1_M$ und $V1'_S$ stromführend sind, wobei der Teil-Phasenstrom $I_{RM}$ betragsmäßig größer ist als der Teil-Phasenstrom $I'_{RS}$. Außerdem sind die Strompfade der Teil-Phasenströme $I_{RM}$ und $I'_{RS}$ und der Differenzstrom $\Delta I'_R$ dargestellt.

In der Figur 11 ist der Fall dargestellt, daß nur noch das Ventil $V1'_S$ stromführend ist und der Teilstrom $I_{RM}$ auf die antiparallele Freilaufdiode $D4_M$ kommutiert ist. Dadurch verlagert sich der Laststrom $I_R$ auf den Brückenzweig 148 des Slave-Wechselrichters 6. Das Ventile $V1'_S$ wird nach einer Zeitverzögerung $\Delta ta_1$ ausgeschaltet, wobei diese Zeitverzögerung von der Amplitude der Phasenstrom-Istwertdifferenz $\Delta I'_R$ abhängig ist. Durch dieses verspätete Ausschalten des Ventils $V1'_S$ gegenüber dem Ventil $V1_M$ sinkt der Teil-Phasenstrom $I_{RM}$ und der Teil-Phasenstrom $I'_{RS}$ steigt an.

In der Figur 12 ist nun der Fall dargestellt, daß beide Ventile $V1_M$ und $V1'_S$ stromlos sind, d.h. die Teil-Phasenströme $I_{RM}$ und $I'_{RS}$ sind auf die Freilaufdioden $D4_M$ und $D4'_S$ kommutiert.

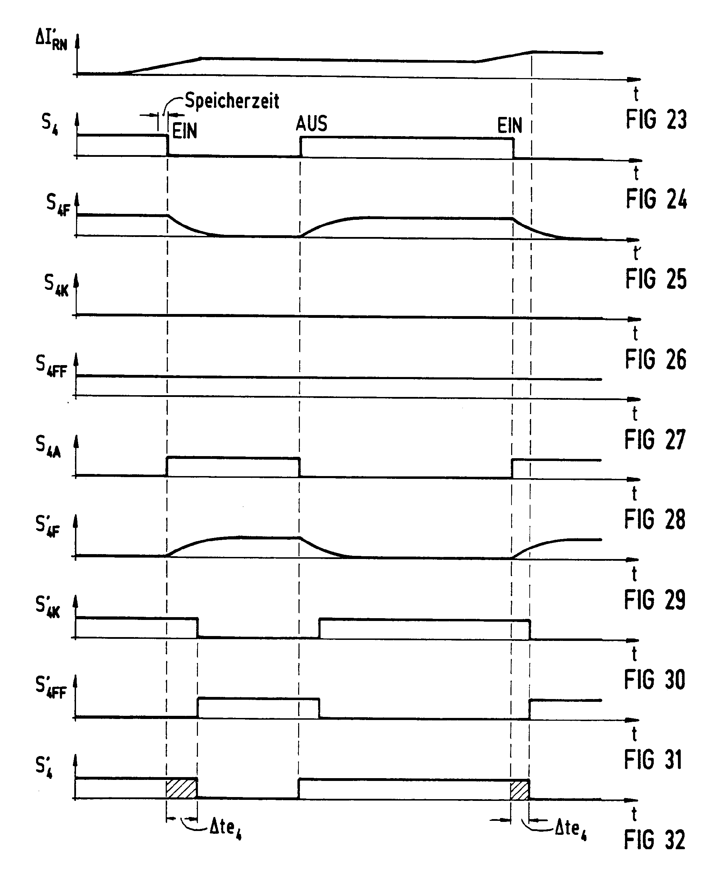

Nachdem die Ventile $V1_M$ und $V1'_S$ Ausimpuls bekommen haben, darf das Ventil $V4_M$ erst nach Ablauf einer Speicherzeit angesteuert werden, damit kein Brückenkurzschluß auftritt. Nach einer weiteren Verzögerungszeit $\Delta te_4$ wird das Ventil $V4'_S$ angesteuert (Figuren 24 und 32). Beim Ausschalten der Ventile $V4_M$ und $V4'_S$ ändert sich nichts (Figuren 24 und 32). Beim nächsten Ausimpuls für den Ventil $V1_M$ und $V1'_S$ ist die Amplitude der Phasenstrom-Istwertdifferenz $\Delta I'_R$ kleiner, so daß die Verzögerungszeit $\Delta ta_1$ kürzer ist. Auch die Verzögerungszeit $\Delta te_4$ zwischen dem Einschalten des Ventils $V4_M$ und $V4'_S$ ist kürzer geworden (Figuren 13, 21, 24, 32). Ist keine Phasenstrom-Istwertdifferenz $\Delta I'_R$ ermittelt worden, so existiert keine Verzögerungszeit $\Delta ta_1$ und $\Delta te_4$ mehr.

Da die vom Wechselrichtersteuersatz 40 bestimmten Schaltzeitpunkte nicht im voraus bekannt sind, ist ein Regeleingriff in der Form eines verfrühten Schaltens nicht möglich. Daher besteht nur die Möglichkeit einer Verzögerung der Schaltbefehle. Diese Verzögerung $\Delta ta$ und $\Delta te$ wird beim Ausschalten und beim Einschalten in Abhängigkeit der Amplitude und der Polarität der Phasenstrom-Istwertdifferenz $\Delta I$ ermittelt.

Dazu wird das Steuersignal $S_1$ über ein Tiefpaß 138 an den invertierenden Eingang des Komparators 142 geführt. Infolge des Tiefpasses 138 wird die Steigung der Anstiegsflanke verändert. Die ermittelte Phasenstrom-Istwertdifferenz $\Delta I'_{RN}$ fließt über einen Widerstand in den Eingang des Komparators 142, wobei in Abhängigkeit der Amplitude und der Polarität der Phasenstrom-Istwertdifferenz $\Delta I'_{RN}$ und des Widerstandes eine Referenzspannung gebildet wird. Erreicht die Amplitude des Filterausgangssignals $S_{1F}$ die Amplitude dieser Referenzspannung, wechselt das Komparatorsignal $S_{1K}$ seine Amplitude. Dieser Wechsel wird gespeichert und mittels des nachfolgenden Einschalt-Verzögerungs-Bausteins 104 in die entsprechende Logik (Abstiegsflanke = Ein) gewandelt.

Ist die ermittelte Phasenstrom-Istwertdifferenz $\Delta I'_R < 0$, dann ist die invertierende Phasenstrom-Istwertdifferenz $\Delta I'_{RN} > 0$ und diese Istwertdifferenz ermittelt mittels des Einschalt-Verzögungs-Bausteins 104 die Verzögerungszeit $\Delta te_1$ zwischen den Steuersignalen $S_1$ und $S'_1$.

Mit diesem Verfahren und dieser Vorrichtung zum Steuern einer Wechselrichteranordnung 2, bestehend aus einem Master-Wechselrichter 4 und wenigstens einem Slave-Wechselrichter 6, können Unterschiede in den Speicherzeiten der Ventile und andere Unsymmetrien der Bauelemente der Wechselrichter 4 und 6 die Ausgangsspannungsform verbessern und die Unsymmetrien in den Ausgangsströmen ausgeregelt werden. Dadurch werden die entstandenen Drehmoment- und Drehzahlpendelungen, insbesondere bei kleinen Drehzahlen reduziert.

**Patentansprüche**

1. Verfahren zur Steuerung einer m-pulsigen Wechselrichteranordnung (2) mit einem Wechselrichtersteuersatz (40) zur Erzeugung von m Steuersignalen ($S_1,...,S_6$), wobei die Wechselrichteranordnung (2) aus einer Parallelschaltung eines Master-Wechselrichters (4) und wenigstens eines Slave-Wechselrichters (6, 8, 10) besteht, wobei die Ausgänge dieser Teilwechselrichter (4, 6, 8, 10) jeweils mit einer Drossel (12) versehen sind und wobei das Verfahren folgende Verfahrensschritte aufweist:

   a) Ermittlung von Phasenstrom-Istwertdifferenzen ($\Delta I_R',...,\Delta I_T'$ bzw. $\Delta I_R'',...,\Delta I_T''$ bzw. $\Delta I_R''',...,\Delta I_T'''$) mit Hilfe von Phasenströmen ($I_{RM},...,I_{TM}$) des Master-Wechselrichters (4) und Phasenströmen ($I_{RS}',...,I_{TS}'$ bzw. $I_{RS}'',...,I_{TS}''$ bzw. $I_{RS}''',..., I_{TS}'''$) des Slave-Wechselrichters (6 bzw. 8 bzw. 10),

   b) Erzeugung von m Steuersignalen ($S_1',...,S_6'$ bzw. $S_1'',...,S_6''$ bzw. $S_1''',...,S_6'''$) für den Slave-Wechselrichter (6 bzw. 8 bzw. 10), indem in Abhängigkeit der Polarität und der Amplitude der ermittelten Phasenstrom-Istwertdifferenzen ($\Delta I_R',...,\Delta I_T'$ bzw. $\Delta I_R'',...,\Delta I_T''$ bzw. $\Delta I_R''',...,\Delta I_T'''$) die m Steuersignale ($S_1,...,S_6$) des Wechselrichtersteuersatzes (40) zeitlich verzögert werden und

   c) Ansteuerung des Master-Wechselrichters (4) mit den m Steuersignalen ($S_1,...,S_6$) des Wechselrichtersteuersatzes (40) und des Slave-Wechselrichters (6 bzw. 8 bzw. 10) mit den erzeugten m Steuersignalen ($S_1',...,S_6'$ bzw. $S_1'',...,S_6''$ bzw. $S_1''',..., S_6'''$).

2. Verfahren nach Anspruch 1, wobei aus den m Steuersignalen ($S_1,...,S_6$) des Wechselrichtersteuersatzes (40) mittels Phasenfehlspannungs-Signalen ($S_{UR}$, $S_{US}$, $S_{UT}$) m linearisierte Steuersignale ($S_1°,..., S_6°$) für den Master-Wechselrichter (4) derart erzeugt werden, daß in Abhängigkeit der Polarität und der Amplitude dieser Phasenfehlspannungs-Signale ($S_{UR}$, $S_{US}$, $S_{UT}$) die m Steuersignale ($S_1,...,S_6$) des Wechselrichtersteuersatzes (40) zeitlich verzögert werden.

3. Verfahren nach Anspruch 1, wobei zur Ermittlung der Phasenstrom-Istwertdifferenzen ($\Delta I_R',...,\Delta I_T'$ bzw. $\Delta I_R'',...,\Delta I_T''$ bzw. $\Delta I_R''',...,\Delta I_T'''$) jeder Phasenstrom ($I_{RM},...,I_{TM}$) des Master-Wechselrichters (4) und jeder Phasenstrom ($I_{RS}',...,I_{TS}'$ bzw. $I_{RS}'', ..., I_{TS}''$, bzw. $I_{RS}''',...,I_{TS}'''$) des Slave-Wechselrichters (6 bzw. 8 bzw. 10) jeweils entgegengesetzt durch einen Stromwandler (50, 52, 54 bzw. 56, 58, 60 bzw. 62, 64, 66) geführt werden, an dessen Ausgang eine Phasenstrom-Istwertdifferenz ($\Delta I_R',...,\Delta I_T'$ bzw. ($\Delta I_R'',...,\Delta I_T''$ bzw. $\Delta I_R''',...,\Delta I_T'''$) abnehmbar ist.

4. Verfahren nach Anspruch 1, wobei die Phasenstrom-Istwerte ($I_{RM}$, $I_{SM}$, $I_{TM}$) des Master-Wechselrichters (4) und die Phasenstrom-Istwerte $I_{RS}',...,I_{TS}'$ bzw. $I_{RS}'',...,I_{TS}''$ bzw. $I_{RS}''',..., I_{TS}'''$) des Slave-Wechselrichters (6 bzw. 8 bzw. 10) gemessen und dann phasenmäßig voneinander subtrahiert werden.

5. Vorrichtung zur Durchführung des Verfahrens nach Anspruch 1, mit einer Wechselrichteranordnung (2) und einem Wechselrichtersteuersatz (40) zur Erzeugung von m Steuersignalen ($S_1,...,S_6$), wobei die Wechselrichteranordnung (2) aus einer Parallelschaltung eines Master-Wechselrichters (4) und wenigstens eines Slave-Wechselrichters (6, 8, 10) besteht, wobei die Ausgänge dieser Teilwechselrichter (4, 6, 8, 10) jeweils mit einer Drossel (12) versehen sind, wobei dem Wechselrichtersteuersatz (40) eine Parallelschalt-Baugruppe (42) nachgeschaltet ist, der die ermittelten Phasenstrom-Istwertdifferenzen ($\Delta I_R',...,\Delta I_T'$ bzw. $\Delta I_R'',..., \Delta I_T''$ bzw. $\Delta I_R''',...,\Delta I_T'''$) zugeführt sind, wobei jeweils m Ausgänge dieser Parallelschalt-Baugruppe (42) mit den Steuereingängen eines Slave-Wechselrichters (6 bzw. 8 bzw. 10) verknüpft sind, und wobei die Parallelschalt-Baugruppe (42) für jede Phase (R,S,T) eine Verzögerungs-Baugruppe (96) enthält, der eingangsseitig eine ermittelte Phasenstrom-Istwertdifferenz ($\Delta I_R'$, $\Delta I_R''$, $\Delta I_R'''$ bzw. $\Delta I_S'$, $\Delta I_S''$, $\Delta I_S'''$ bzw. $\Delta I_T'$, $\Delta I_T''$, $\Delta I_T'''$) und zwei Steuersignale ($S_1$, $S_4$ bzw. $S_2$, $S_5$ bzw. $S_3$, $S_6$) des Wechselrichtersteuersatzes (40) zugeführt sind und der ausgangsseitig zwei Steuersignale ($S_1'$, $S_4'$, $S_1''$, $S_4''$, $S_1'''$, $S_4'''$ bzw. $S_2'$, $S_5'$, $S_2''$, $S_5''$, $S_2'''$, $S_5'''$ bzw. $S_3'$, $S_6'$, $S_3''$, $S_6''$, $S_3'''$, $S_6'''$) für den Slave-Wechselrichter (6 bzw. 8 bzw. 10) abnehmbar sind.

6. Vorrichtung zur Durchführung des Verfahrens nach Anspruch 1, mit einer Wechselrichteranordnung (2) und einem Wechselrichtersteuersatz (40) zur Erzeugung von m Steuersignalen ($S_1,...,S_6$), wobei die Wechselrichteranordnung (2) aus einer Parallelschaltung eines Master-Wechselrichters (4) und wenigstens eines Slave-Wechselrichters (6, 8, 10) besteht, wobei die Ausgänge dieser Teilwechselrichter (4, 6, 8, 10) jeweils mit einer Drossel (12) versehen sind, wobei dem Wechselrichtersteuersatz (40) eine Parallelschalt-Baugruppe (94) nachgeschaltet ist, der die ermittelten Phasenstrom-Istwertdifferenzen $(\Delta I_R', ..., \Delta I_T'$ bzw. $\Delta I_R'', ..., \Delta I_T''$ bzw. $(\Delta I_R''', ..., \Delta I_T''')$ und Phasenfehlspannungs-Signale $(S_{UR}, S_{US}, S_{UT})$ zugeführt sind, wobei jeweils m Ausgänge dieser Parallelschalt-Baugruppe (42) mit den Steuereingängen eines Slave-Wechselrichters (6 bzw. 8 bzw. 10) verknüpft sind, und wobei die Parallelschalt-Baugruppe (94) für jede Phase (R bzw. S bzw. T) eine Verzögerungs-Baugruppe (96) enthält, der eingangsseitig ein Phasenfehlspannungs-Signal $(S_{UR}$ bzw. $S_{US}$ bzw. $S_{UT})$ und zwei Steuersignale $(S_1, S_4$ bzw. $S_2, S_5$ bzw. $S_3, S_6)$ des Wechselrichtersteuersatzes (40) zugeführt sind und der ausgangsseitig zwei Steuersignale $(S_1^\circ, S_4^\circ$ bzw. $S_2^\circ, S_5^\circ$ bzw. $S_3^\circ, S_6^\circ)$ für den Master-Wechselrichter (4) abnehmbar sind.

7. Vorrichtung nach Anspruch 5, wobei jeder Phasenleiter (14, 16, 18) des Master-Wechselrichters (4) und jeder Phasenleiter (20, 22, 24 bzw. 26, 28, 30 bzw. 32, 34, 36) des Slave-Wechselrichters (6 bzw. 8 bzw. 10) jeweils derart durch einen Stromwandler (50, 52, 54 bzw. 56, 58, 60 bzw. 62, 64, 66) geführt sind, daß die Phasenströme $(I_{RM}, ..., I_{TM})$ des Master-Wechselrichters (4) und die Phasenströme $(I_{RS}', ..., I_{TS}'$ bzw. $I_{RS}'', ..., I_{TS}''$ bzw. $I_{RS}''', ..., I_{TS}''')$ des Slave-Wechselrichters (6 bzw. 8 bzw. 10) zueinander entgegengesetzt fließen und wobei jeder Ausgang der Stromwandler (50 bis 66) mit der Parallelschalt-Baugruppe (42) verknüpft ist.

8. Vorrichtung nach Anspruch 6, wobei jeder Phasenleiter (14, 16, 18) des Master-Wechselrichters (4) und jeder Phasenleiter (20, 22, 24 bzw. 26, 28, 30 bzw. 32, 34, 36) des Slave-Wechselrichters (6 bzw. 8 bzw. 10) mit einer Stromerfassungs-Einrichtung 68 bis 90) versehen ist, deren Ausgänge mit einem Differenzbildner (92) verknüpft sind, welcher der Parallelschalt-Baugruppe (94) vorgeschaltet ist.

9. Vorrichtung nach Anspruch 5 oder 6, wobei jede Verzögerungs-Baugruppe (96) einen ersten und einen zweiten Ausschalt-Verzögerungs-Baustein (100 und 102) und einen ersten und einen zweiten Einschalt-Verzögerungs-Baustein (104 und 106) enthält, wobei jeweils ein Ausschalt-Verzögerungs-Baustein (100, 102) und ein EinschaltVerzögerungs-Baustein (104, 106) elektrisch in Reihe geschaltet sind und wobei dem ersten Ausschalt-Verzögerungs-Baustein (100) und dem zweiten Einschalt-Verzögerungs-Baustein (106) eine Phasenstrom-Istwertdifferenz $(\Delta I_{RN}')$ und die invertierte Phasenstrom-Istwertdifferenz $(\Delta I_{RP}')$ dem ersten Einschalt-Verzögerungs-Baustein (104) und dem zweiten Ausschalt-Verzögerungs-Baustein (102) und dem ersten und zweiten Ausschalt-Verzögerungs-Baustein (100, 102) jeweils ein Steuersignal $(S_1$ bzw. $S_4)$ der m Steuersignale $(S_1, ..., S_6)$ des Wechselrichtersteuersatzes (40) zugeführt sind.

## Claims

1. Method for controlling an m-pulse inverter arrangement (2) having an inverter trigger set (40) for generating m control signals $(S_1, ..., S_6)$, wherein the inverter arrangement (2) consists of a parallel circuit arrangement of a master inverter (4) and at least one slave inverter (6, 8, 10), wherein the outputs of these sub-inverters (4, 6, 8, 10) are provided with a respective choke (12), and wherein the method has the following method steps:

   a) determination of phase current-actual value differences $(\Delta I_R', ..., \Delta I_T'$, and $\Delta I_R'', ..., \Delta I_T''$, and $(\Delta I_R''', ..., \Delta I_T''')$ with the aid of phase currents $(I_{RM}, ..., I_{TM})$ of the master inverter (4) and phase currents $(I_{RS}', ..., I_{TS}'$, and $I_{RS}'', ..., I_{TS}''$, and $I_{RS}''', ..., I_{TS}''')$ of the slave inverter (6 and 8 and 10 respectively),

   b) generation of m control signals $(S_1', ..., S_6'$, and $S_1'', ..., S_6''$, and $S_1''', ..., S_6''')$ for the slave inverter (6 and 8 and 10 respectively), in that the m control signals $(S_1, ..., S_6)$ of the inverter trigger set (40) are delayed temporally as a function of the polarity and the amplitude of the phase current-actual value differences $(\Delta I_R', ..., \Delta I_T'$, and $\Delta I_R'', ..., \Delta I_T''$, and $\Delta I_R''', ..., \Delta I_T'''$ respectively) which are determined, and

   c) activation of the master inverter (4) with the m control signals $(S_1, ..., S_6)$ of the inverter trigger set (40) and activation of the slave inverter (6 and 8 and 10) with the m control signals $(S_1', ..., S_6'$, and $S_1'', ..., S_6''$, and $S_1''', ..., S_6'''$ respectively) which are generated.

2. Method according to claim 1, wherein m linearized control signals $(S_1^\circ, ..., S_6^\circ)$ for the master inverter (4) are generated from the m control signals $(S_1, ..., S_6)$ of the inverter trigger set (40) by means of phase offset voltage signals $(S_{UR}, S_{US}, S_{UT})$ in such a way that the m control signals $(S_1, ..., S_6)$ of the inverter trigger set (40) are delayed temporally as a function of the polarity and the amplitude of these phase offset

EP 0 489 971 B1

voltage signals ($S_{UR}$, $S_{US}$, $S_{UT}$).

3. Method according to claim 1, wherein, in order to determine the phase current-actual value differences ($\Delta I_R'$, ..., $\Delta I_T'$, and $\Delta I_R''$, ..., $\Delta I_T''$, and $\Delta I_R'''$, ..., $\Delta I_T'''$), each phase current ($I_{RM}$, ..., $I_{TM}$) of the master inverter (4) and each phase current ($I_{RS}'$, ..., $I_{TS}'$, and $I_{RS}''$, ..., $I_{TS}''$, and $I_{RS}'''$, ..., $I_{TS}'''$) of the slave inverter (6 and 8 and 10 respectively) are conducted in opposition, in each case, through a current transformer (50, 52, 54, and 56, 58, 60, and 62, 64, 66 respectively) at the output of which it is possible to tap a phase current-actual value difference ($\Delta I_R'$, ..., $\Delta I_T'$, and $\Delta I_R''$, ..., $\Delta I_T''$ and $\Delta I_R'''$, ..., $\Delta I_T'''$ respectively).

4. Method according to claim 1, wherein the phase current actual values ($I_{RM}$, $I_{SM}$, $I_{TM}$) of the master inverter (4) and the phase current actual values ($I_{RS}'$, ..., $I_{TS}'$, and $I_{RS}''$, ..., $I_{TS}''$, and $I_{RS}'''$, ..., $I_{TS}'''$) of the slave inverter (6 and 8 and 10 respectively) are measured and are then subtracted from each other in proper phase relation.

5. Apparatus for carrying out the method according to claim 1, having an inverter arrangement (2) and an inverter trigger set (40) for generating m control signals ($S_1$, ..., $S_6$), wherein the inverter arrangement (2) consists of a parallel circuit arrangement of a master inverter (4) and at least one slave inverter (6, 8, 10), wherein the outputs of these sub-inverters (4, 6, 8, 10) are provided with a respective choke (12), wherein connected downstream of the inverter trigger set (40) there is a parallel-connected assembly (42) which is supplied with the phase current-actual value differences ($\Delta I_R'$, ..., $\Delta I_T'$, and $\Delta I_R''$, ..., $\Delta I_T''$ and $\Delta I_R'''$, ..., $\Delta I_T'''$) which are determined, wherein m outputs of this parallel-connected assembly (42) are respectively linked to the control inputs of a slave inverter (6 and 8 and 10), and wherein the parallel-connected assembly (42) contains, for each phase (R,S,T), a time-delay assembly (96) which, on the input side, is supplied, with a phase current-actual value difference ($\Delta I_R'$, $\Delta I_R''$, $\Delta I_R'''$ and $\Delta I_S'$, $\Delta I_S''$, $\Delta I_S'''$ and $\Delta I_T'$, $\Delta I_T''$, $\Delta I_T'''$ respectively) which is determined and two control signals ($S_1$, $S_4$, and $S_2$, $S_5$, and $S_3$, $S_6$ respectively) of the inverter trigger set (40), and from which, on the output side, two control signals ($S_1'$, $S_4'$, $S_1''$, $S_4''$, $S_1'''$, $S_4'''$ and $S_2'$, $S_5'$, $S_2''$, $S_5''$, $S_2'''$, $S_5'''$ and $S_3'$, $S_6'$, $S_3''$, $S_6''$, $S_3'''$, $S_6'''$ respectively) can be tapped for the slave inverter (6 and 8 and 10 respectively).

6. Apparatus for carrying out the method according to claim 1, having an inverter arrangement (2) and an inverter trigger set (40) for generating m control signals ($S_1$, ..., $S_6$), wherein the inverter arrangement (2) consists of a parallel circuit arrangement of a master inverter (4) and at least one slave inverter (6, 8, 10), wherein the outputs of these sub-inverters (4, 6, 8, 10) are provided with a respective choke (12), wherein connected downstream of the inverter trigger set (40) there is a parallel-connected assembly (94) which is supplied with the phase current-actual value differences ($\Delta I_R'$, ..., $\Delta I_T'$, and $\Delta I_R''$, ..., $\Delta I_T''$ and $\Delta I_R'''$, ..., $\Delta I_T'''$) which are determined and phase offset voltage signals ($S_{UR}$, $S_{US}$, $S_{UT}$), wherein m outputs of this parallel-connected assembly (42) (sic) are respectively linked to the control inputs of a slave inverter (6 and 8 and 10), and wherein the parallel-connected assembly (94) contains, for each phase (R and S and T), a time-delay assembly (96) which, on the input side, is supplied with a phase offset voltage signal ($S_{UR}$ and $S_{US}$ and $S_{UT}$ respectively) and two control signals ($S_1$, $S_4$, and $S_2$, $S_5$, and $S_3$, $S_6$ respectively) of the inverter trigger set (40), and from which, on the output side, two control signals ($S_1^{\circ}$, $S_4^{\circ}$ and $S_2^{\circ}$, $S_5^{\circ}$ and $S_3^{\circ}$, $S_6^{\circ}$ respectively) can be tapped for the master inverter (4).

7. Apparatus according to claim 5, wherein each phase conductor (14, 16, 18) of the master inverter (4) and each phase conductor (20, 22, 24, and 26, 28, 30, and 32, 34, 36) of the slave inverter (6 and 8 and 10 respectively) are guided, in each case, through a current transformer (50, 52, 54, and 56, 58, 60, and 62, 64, 66 respectively) in such a way that the phase currents ($I_{RM}$, ..., $I_{TM}$) of the master inverter (4) and the phase currents ($I_{RS}'$, ..., $I_{TS}'$, and $I_{RS}''$, ..., $I_{TS}''$, and $I_{RS}'''$, ..., $I_{TS}'''$) of the slave inverter (6 and 8 and 10 respectively) flow in opposition to each other, and wherein each output of the current transformers (50 to 66) is linked to the parallel-connected assembly (42).

8. Apparatus according to claim 6, wherein each phase conductor (14, 16, 18) of the master inverter (4) and each phase conductor (20, 22, 24, and 26, 28, 30, and 32, 34, 36) of the slave inverter (6 and 8 and 10 respectively) is provided with a current-detection device (68 to 90), the outputs of which are linked to a subtractor (92) which is connected upstream of the parallel-connected assembly (94).

9

9. Apparatus according to claim 5 or 6, wherein each time-delay assembly (96) contains a first and a second opening-delay module (100 and 102) and a first and a second closing-delay module (104 and 106), wherein a respective opening-delay module (100, 102) and a respective closing-delay module (104, 106) are electrically connected in series, and wherein the first opening-delay module (100) and the second closing-delay module (106) are supplied with a phase current-actual value difference ($\Delta I_{RN}'$), the first closing-delay module (104) and the second opening-delay module (102) are supplied with the inverted phase current-actual value difference ($\Delta I_{RP}'$), and the first and second opening-delay modules (100, 102) are supplied with a respective control signal ($S_1$ and $S_4$) of the m control signals ($S_1$, ..., $S_6$) of the inverter trigger set (40).

## Revendications

1. Procédé pour la commande d'un dispositif à onduleurs (2) à m impulsions, comportant un ensemble de commande (40) servant à produire m signaux de commande ($S_1$,...,$S_6$), selon lequel le dispositif à onduleurs (2) est constitué par un circuit parallèle formé d'un onduleur maître (4) et au moins d'un onduleur esclave (6,8,10), les sorties de ces onduleurs partiels (4,6,8,10) étant pourvues respectivement d'une bobine de self (12), procédé qui comporte les étapes opératoires suivantes :

   a) détermination de différences de valeurs réelles du courant de phase ($\Delta I_R'$,...,$\Delta I_T'$ ou $\Delta I_R''$,...,$\Delta I_T''$ ou $\Delta I_R'''$,...,$\Delta I_T'''$) à l'aide de courants de phase ($I_{RM}$..., $I_{TM}$) de l'onduleur maître (4), et de courants de phase ($I_{RS}'$,...,$I_{TS}'$ ou $I_{RS}''$,...,$I_{TS}''$ ou $I_{RS}'''$,...,$I_{TS}'''$) de l'onduleur esclave (6 ou 8 ou 10),

   b) production de m signaux de commande ($S_1'$,...,$S_6'$ ou $S_1''$,...,$S_6''$ ou $S_1'''$,...,$S_6'''$) pour l'onduleur esclave (6 ou 8 ou 10), par le fait, qu'en fonction de la polarité et de l'amplitude des différences déterminées de valeurs réelles du courant de phase ($\Delta I_R'$,...,$\Delta I_T'$ ou $\Delta I_R''$,...,$\Delta I_T''$ ou $\Delta I_R'''$,...,$\Delta I_T'''$), les m signaux de commande ($S_1$,...,$S_6$) de l'ensemble de commande (40) des onduleurs sont retardés, et

   c) commande de l'onduleur maître (4) avec les m signaux de commande ($S_1$,...,$S_6$) de l'ensemble de commande (40) des onduleurs et de l'onduleur esclave (6 ou 8 ou 10) avec les m signaux de commande produits ($S_1'$,...,$S_6'$ ou $S_1''$,...,$S_6''$ ou $S_1'''$,...,$S_6'''$).

2. Procédé selon la revendication 1, selon lequel m signaux de commande linéarisés ($S_1°$,...,$S_6°$) pour l'onduleur maître (4) sont produits à partir des m signaux de commande ($S_1$,...,$S_6$) de l'ensemble de commande (40) des onduleurs, au moyen de signaux de tension de défaut de phase ($S_{UR}$,$S_{US}$, $S_{UT}$) de telle sorte que les m signaux de commande ($S_1$,...,$S_6$) de l'ensemble de commande (40) des onduleurs sont retardés en fonction de la polarité et de l'amplitude de ces signaux de tension d'erreur de phase ($S_{UR}$,$S_{US}$,$S_{UT}$).

3. Procédé suivant la revendication 1, selon lequel, pour déterminer les différences des valeurs réelles du courant de phase ($\Delta I_R'$,...,$\Delta I_T'$ ou $\Delta I_R''$,...,$\Delta I_T''$ ou $\Delta I_R'''$,...,$\Delta I_T'''$), chaque courant de phase ($I_{RM}$..., $I_{TM}$) de l'onduleur maître (TM) et chaque courant de phase ($I_{RS}'$,...,$I_{TS}'$ ou $I_{RS}''$,...,$I_{TS}''$ ou $I_{RS}'''$,...,$I_{TS}'''$) de l'onduleur esclave (6 ou 8 ou 10) sont envoyés respectivement et en sens opposé, par l'intermédiaire d'un transformateur d'intensité (50,52,54 ou 56,58,60 ou 62,64,66), à la sortie duquel peut être prélevée une différence de valeurs réelles de courant de phase ($\Delta I_R'$,...,$\Delta I_T'$ ou $\Delta I_R''$,...,$\Delta I_T''$ ou $\Delta I_R'''$,...,$\Delta I_T'''$).

4. Procédé suivant la revendication 1, selon lequel les valeurs réelles du courant de phase ($I_{RM}$, $I_{SM}$, $I_{TM}$) de l'onduleur maître (4) et les valeurs réelles du courant de phase ($I_{RS}'$,...,$I_{TS}'$ ou $I_{RS}''$,...,$I_{TS}''$ ou $I_{RS}'''$,...,$I_{TS}'''$) de l'onduleur esclave (6 ou 8 ou 10) sont mesurées, puis soustraites les unes des autres, pour chaque phase.

5. Dispositif pour la mise en oeuvre du procédé suivant la revendication 1, comportant un dispositif à onduleurs (2) et un ensemble de commande (40) des onduleurs pour produire m signaux de commande ($S_1$;$S_6$), dans lequel le dispositif à onduleurs (2) est constitué par un circuit parallèle formé d'un onduleur maître (4) et au moins d'un onduleur esclave (6,8,10), les sorties de ces onduleurs partiels (4,6,8,10) étant pourvues respectivement d'une bobine de self (12), et dans lequel, en aval de l'ensemble de commande (40) des onduleurs, est branché un module de commutation parallèle (42), auquel sont envoyées les différences déterminées de valeurs réelles du courant de phase ($\Delta I_R'$,...,$\Delta I_T'$ ou $\Delta I_R''$,...,$\Delta I_T''$ ou $\Delta I_R'''$,...,$\Delta I_T'''$), et dans lequel respectivement m sorties de ce module de commutation parallèle (42) sont reliées aux entrées de commande d'un onduleur esclave (6 ou 8 ou 10), et dans lequel le module de commutation parallèle (42) comporte, pour chaque phase (R, S, T), un module de retardement (96), auquel sont envoyés,

EP 0 489 971 B1

côté entrée, une différence déterminée de valeurs réelles du courant de phase ($\Delta I_R'$, $\Delta I_R''$, $\Delta I_R'''$ ou $\Delta I_S'$, $\Delta I_S''$, $\Delta I_S'''$ ou $\Delta I_T'$, $\Delta I_T''$, $\Delta I_T'''$) et deux signaux de commande ($S_1$, $S_4$ ou $S_2$, $S_5$ ou $S_3$, $S_6$) de l'ensemble de commande (40) des onduleurs et sur la sortie duquel peuvent être prélevés deux signaux de commande ($S_1'$, $S_4'$, $S_1''$, $S_4''$, $S_1'''$, $S_4'''$ ou $S_2'$, $S_5'$, $S_2''$, $S_5''$, $S_2'''$, $S_5'''$ ou $S_3'$, $S_6'$, $S_3''$, $S_6''$, $S_3'''$, $S_6'''$) pour l'onduleur esclave (6 ou 8 ou 10).

6. Dispositif pour la mise en oeuvre du procédé suivant la revendication 1, comportant un dispositif à onduleurs (2) et un ensemble de commande (40) des onduleurs pour produire m signaux de commande ($S_1$,...,$S_6$), dans lequel le dispositif à onduleurs (2) est constitué par un circuit parallèle formé d'un onduleur maître (4) et au moins d'un onduleur esclave (6,8,10), les sorties de ces onduleurs partiels (4,6,8,10) étant pourvues respectivement d'une bobine de self (12), et dans lequel, en aval de l'ensemble de commande (40) des onduleurs, est branché un module de commutation parallèle (94), auquel sont envoyées les différences déterminées de valeurs réelles du courant de phase ($\Delta I_R'$,...,$\Delta I_T'$ ou $\Delta I_R''$,...,$\Delta I_T''$ ou $\Delta I_R'''$,...,$\Delta I_T'''$), et des signaux de tension de défaut de phase ($S_{UR}$,$S_{US}$,$S_{UT}$), et dans lequel respectivement m sorties de ce groupe de commutation parallèle (42) sont réunies aux entrées de commande d'un onduleur esclave (6 ou 8 ou 10), et dans lequel le module de commutation parallèle (94) comporte, pour chaque phase (R ou S ou T), un module de raccordement (96), au côté entrée duquel sont envoyés un signal de tension de défaut de phase ($S_{UR}$ ou $S_{US}$ ou $S_{UT}$) et deux signaux de commande ($S_1$, $S_4$ ou $S_2$, $S_5$ ou $S_3$, $S_6$) de l'ensemble de commande (40) des onduleurs et sur le côté sortie duquel peuvent être prélevés deux signaux de commande ($S°_1$, $S°_4$ ou $S°_2$, $S°_5$ ou $S°_3$, $S°_6$) pour l'onduleur maître (4).

7. Dispositif suivant la revendication 5, dans lequel chaque conducteur de phase (14,16,18) de l'onduleur maître (4) et chaque conducteur de phase (20,22,24 ou 26,28, 30 ou 32,34,36) de l'onduleur esclave (6 ou 8 ou 10) traversent respectivement un transformateur d'intensité (50,52,54 ou 56, 58,60 ou 62,64,66) de telle sorte que les courants de phase ($I_{RM}$,...,$I_{TM}$) de l'onduleur maître (4) et des courants de phase ($I'_{RS}$,...,$I'_{TS}$ ou $I_{RS}''$,...,$I_{TS}''$ ou $I_{RS}'''$,...,$I_{TS}'''$) de l'onduleur esclave (6 ou 8 ou 10) circulent en des sens réciproquement opposés, et dans lequel chaque sortie des transformateurs d'intensité (50 à 66) est reliée au module de commutation parallèle (42).

8. Dispositif suivant la revendication 6, dans lequel chaque conducteur de phase (14,16,18) de l'onduleur maître (4) et chaque conducteur de phase (20,22,24 ou 26,28, 30 ou 32,34,36) de l'onduleur esclave (6 ou 8 ou 10) est pourvu d'un dispositif de détection de courant (68 à 90), dont les sorties sont réunies à un dispositif de formation de différence (90), qui est branché en amont du module de commutation parallèle (94).

9. Dispositif suivant la revendication 5 ou 6, dans lequel chaque module de retardement (96) comporte des premier et second modules de retardement de débranchement (100 et 102) et des premier et second modules de retardement de branchement (104 et 106), et dans lequel respectivement un module de retardement de débranchement (100,102) et un module de retardement de branchement (104,106) sont branchés électriquement en série, et dans lequel une différence de valeurs réelles du courant de phase ($\Delta I'_{RN}$) est envoyée au premier module de retardement de débranchement (100) et au premier module de retardement de branchement (106), et l'inverse de la différence de valeurs réelles du courant de phase ($\Delta I'_{RP}$) est envoyée au premier module de retardement de branchement (104) et au second module de retardement de débranchement (102) et respectivement un signal de commande ($S_1$ ou $S_4$) parmi les m signaux de commande ($S_1$,...,$S_6$) de l'ensemble de commande (40) des onduleurs sont envoyés aux premier et second modules de retardement de débranchement (100, 102).

FIG 1

FIG 2

FIG 3

EP 0 489 971 B1

FIG 4

FIG 5

FIG 6

FIG 7

FIG 8

FIG 9

EP 0 489 971 B1

FIG 10

FIG 11

FIG 12

$S_1$ AUS EIN AUS

t

FIG 13

$S_{1F}$

t

FIG 14

$S_{1K}$

t

FIG 15

$S_{1FF}$

t

FIG 16

$S_{1A}$

t

FIG 17

$S'_{1F}$

t

FIG 18

$S'_{1K}$

t

FIG 19

$S'_{1FF}$

t

FIG 20

$S'_1$

$\Delta ta_1$          $\Delta ta_1$

t

FIG 21

$\Delta I'_{RP}$

t

FIG 22

FIG 23

FIG 24

FIG 25

FIG 26

FIG 27

FIG 28

FIG 29

FIG 30

FIG 31

FIG 32